# EUROPEAN PATENT SPECIFICATION

(11) **EP 1 858 342 B1**
(45) Date of publication and mention of the grant of the patent: **06.05.2009**
(21) Application number: 06708689.2
(22) Date of filing: 08.03.2006
(51) Int. Cl.: A23D 9/00, A23L 1/30, A23L 1/29, A23C 9/00, A23C 11/00, A23C 11/02, A23C 11/06, A23C 11/08, A23L 1/00, A23L 1/19, A23L 1/22, A23L 1/234

(54) **PROCESS FOR PREPARING NUTRITIONAL COMPOSITIONS**
VERFAHREN ZUR HERSTELLUNG VON NÄHRMITTELZUSAMMENSETZUNGEN
PROCÉDÉ DE PRÉPARATION DE COMPOSITIONS NUTRITIONELLES

(30) Priority: 08.03.2005 EP 05005064
(43) Date of publication of application: 28.11.2007
(73) Proprietor: Nestec S.A., 1800 Vevey (CH)
(72) Inventor: ERDMANN, Peter, CH-3006 Bern (CH); PFALLER, Werner, CH-1350 Orbe (CH); FANKHAUSER,Peter, CH-3510 Konolfingen (CH); WEISS, Claudia Caroline, CH-8832 Wollerau (CH)
(86) International application number: PCT/EP2006/060558
(87) International publication number: WO 2006/094995

(56) References cited:
- US-A- 5 338 559
- US-A- 6 136 353
- US-A1- 2001 055 636
- US-B1- 6 468 579

## Description

### Field of the invention

This invention relates to a process for preparing nutritional compositions by extrusion and to nutritional compositions so prepared.

### Background of the invention

Powdered nutritional compositions containing the macronutrients protein, fat and carbohydrate are well known. They are intended to be reconstituted prior to consumption with a liquid which is usually water but may alternatively be liquid milk or fruit juice. Such products include infant formula, growing up milks and compositions used in clinical nutrition, for example for enteral feeding. Conventionally, such products are manufactured by mixing all the ingredients with water, subjecting the liquid mixture to a thermal treatment to reduce bacterial loads, homogenising the mixture and then spray drying it

It may be seen that in the manufacturing process described above, water is added only to be removed again by the spray drying process. It will be appreciated that removal of water requires energy in the form of heat and the equipment required takes up a considerable amount of space. In addition, care is required in order to avoid microbial contamination or cross-contamination from other products produced in the same equipment. Accordingly, there is a need to develop an alternative method to produce such compositions which has lower energy requirements and for which the equipment is more compact.

US Patent No 6136353 is concerned with increasing the overall fat content' of a granulated material such as fish food. The granulated material is mixed with a fat-containing liquid under reduced pressure and the pressure is increased during the mixing process whereby the fat-containing liquid is absorbed into pores and capillaries of the granules increasing the fat content of the granulated material. US Patent No. 5338559 relates to a specific design of extrusion equipment for creating a reduced pressure at the outlet of the extruder such that, in use, the extruded product expands as it leaves the extruder. US Patent No. 6468579 relates to the extrusion of food products with a fibrous texture using a mixture which includes whey proteins. The products are generally finished single products where the appearance of the product is important such as snacks and sandwiches. US Patent Application No. 2001/055636 discloses a process for the extrusion of composite products having two distinct components such as novelty petfoods and breakfast cereals.

### Summary of the invention

Surprisingly, the present inventors have found that it is possible to extrude a mixture comprising an oil in water emulsion without leading to coalescence or inversion of the emulsion. The emulsion is stable under high shear, high temperatures, high pressures and minimal amount of water in the extruder.

Accordingly, the present invention provides a process for preparing a nutritional composition including protein, fat and carbohydrate which process comprises emulsifying the fat in water with an emulsifier to form an emulsion having a solids content of at least 70%, homogenising the emulsion and extruding the emulsion together with a solid matrix comprising the protein and the carbohydrate in a ratio between 1 part emulsion:0.5 parts matrix to 1 part emulsion:5 parts matrix into a vacuum chamber at a temperature at or above the melting point of the mixture of emulsion and matrix to obtain a solid product having a maximum water content of 10%.

The process of the invention provides a solid product that is easily dispersible upon addition to water or another liquid to give a homogeneous liquid mixture of protein, fat and carbohydrate with no discernible separation of aqueous and non-aqueous phases.

Preferably the nutritional composition is an infant formula.

The process may additionally include a drying step to remove any remaining moisture from the extruded product.

The process may optionally include a milling step whereby the extruded product, which is typically in the form of porous pellets, is reduced to a powder with a higher density.

### Detailed description of the invention

In the present specification, the following words are given a definition that must be taken into account when reading and interpreting the description, examples and claims.

The term "stable" used to describe the emulsion means that the emulsion is stable with respect to coalescence and/or inversion, both visually determined.

The term "solid matrix" means a mixture of solid ingredients without added liquids

The term "easily disperses" means disperses with a minimum of agitation or stirring.

All percentages are percentages by weight unless otherwise stated.

The properties and constitution of the emulsion are crucial in order to achieve the desired result with respect to dispersibility. Accordingly, the emulsion has a water content of at the most about 30% w/w. It is stable towards coalescence and inversion when extruded with a solid matrix of protein and carbohydrate in a weight ratio of from 1:0.5 to about 1:5 at a temperature at or above the melting point of the mixture of the emulsion and the solid matrix. The thus obtained extruded product is expanded into a vacuum chamber to obtain a solid product having at the most about 10% water content.

The emulsifier may be water soluble or fat soluble. Suitable water soluble emulsifiers include caseinates such as sodium caseinate and potassium caseinate, acid caseinate, other milk fractions that are commonly used as emulsifiers and sugar esters. Suitable fat soluble emulsifiers include lecithins and mono- and diglycerides such as CITREM®. Preferably both water soluble and fat soluble emulsifiers are used. In this case, preferably both the water soluble emulsifier and the fat soluble emulsifier are added to the fat prior to emulsification. The weight ratio between fat and emulsifier may be in the range of from about 10:1 to about 18:1 depending on the amount of water employed. For example, a preferred ratio between fat and emulsifier is about 14:1 at 26 % water (ideally 69 % fat, 5 % emulsifier and 26 % water). If the ratio is too low, there is a risk that the emulsion inverts during homogenisation. If, however, the ratio is too high, it is difficult to stabilise small fat particles during the extrusion step.

The fat component may constitute from 50 to 75% w/w of the emulsion. Any fat or mixture of fats generally suitable for nutritional compositions may be used. For example, if the composition is an infant formula, palm olein, coconut oil, canola oil, milk fat and mixtures thereof may be used. Long chain polyunsaturated fatty acids may also be incorporated such as docosahexaenoic acid (from fish oil) and arachidonic acid (from fungal oils such as that obtained from *Mortierella alpina*). Oil soluble vitamins such as Vitamin E may also be included in the emulsion if desired.

The content of fat in the nutritional composition will vary according to the type of composition and is generally expressed in terms of the contribution made by fat to the overall energy of the composition. For example, in an infant formula, fat generally provides from 30 to 55% of the total energy of the composition depending upon the type of product and the age group for which it is intended.

The emulsion may be homogenized by any method known in the art to reach a mean particle size D_{[0.5]} in the range from 0.2 to 10µm. A multi-step homogenisation is preferred. In practice, the preferred mean particle size after homogenisation will depend upon the emulsifier being used and the composition of fats which form the emulsion. For example, for a mixture of vegetable fats emulsified with sodium caseinate, D_{[0.5]} preferably lies in the range from 0.2 to 1.5µm.

The carbohydrate content of the nutritional composition will also be selected with reference to the type of composition being produced. Again taking infant formula as an example, suitable carbohydrates include lactose, maltodextrin and starch and mixtures thereof.

The content of carbohydrate in the nutritional composition will vary according to the type of composition and is generally expressed in terms of the contribution made by carbohydrate to the overall energy of the composition. For example, an infant formula generally contains from 7 to 15g carbohydrate per 100kcal of formula depending upon the type of product and the age group for which it is intended.

Prebiotic fibres may also be included if desired. The term prebiotic is used to designate a non-digestible food ingredient that beneficially affects the host by selectively stimulating the growth and/or activity of one or a limited number of bacteria in the colon, and thus improves host health. Such ingredients are non-digestible in the sense that they are not broken down and absorbed in the stomach or small intestine and thus pass intact to the colon where they are selectively fermented by the beneficial bacteria. Examples of prebiotics suitable for addition to infant formula include certain oligosaccharides, such as fructooligosaccharides, galactooligosaccharides, sialyl-lactose and oligosaccharides derived from animal milk.

The protein component of the nutritional composition will likewise be selected with reference to the type of composition being produced. Once more taking infant formula as an example, suitable proteins include milk proteins such as casein and whey, soy proteins, rice proteins and mixtures thereof. A mixture of 70% whey to 30% casein is particularly preferred. The proteins may be intact or partially hydrolysed.

The content of protein in the nutritional composition will vary according to the type of composition and is generally expressed in terms of the contribution made by protein to the overall energy of the composition. For example, an infant formula generally contains from 1.8 to 4.5g protein per 100kcal of formula depending upon the type of product and the age group for which it is intended.

The weight ratio between the emulsion and the solid matrix is from 1:0.5 to 1:5. Within this range, the selected weight ratio will depend on the type of nutritional composition desired. The water content of the mixture of emulsion and solid matrix entering the extruder may be 15% or less.

Other ingredients typically present in nutritional compositions such as nucleotides, vitamins, minerals and trace elements may be added to the solid matrix prior to extrusion (or to the fat prior to emulsification if fat soluble). Alternatively, some or all of these ingredients may be added after extrusion by dry mixing.

Any suitable extruder may be used such as, e.g. single screw, twin screw, multi screw, ring screw, planetary gear extruder, etc. or any other continuous or discontinuous mixing system with the possibility to shape the melt (melted mixture). Furthermore, the term "vacuum" used in the present context is intended to denote a pressure between 0.01 and 250 mbar, preferably between 1 and 50 mbar. A particularly preferred range is between 10 and 25 mbar.

Extrusion is carried out at a temperature at or above the melting point of the mixture of the emulsion and the solid matrix. Typically, this temperature will lie in the range between 80 and 90°C and the extrusion will be carried out at a temperature in the range between 80 and 120°C. Extruding at a temperature below the melting point tends to lead to instability of the emulsion during extrusion, which may in turn lead to a product with reduced solubility, flocculation or other unwanted effects such as complete phase separation when the product is reconstituted. Conversely, extruding at an elevated temperature can adversely affect the nutritional quality of the product as measured for example by increased lysine blockage and browning of the product.

The water content of the solid product leaving the vacuum chamber is 10% or less. If desired, this may be subjected to a further drying step. For example, if it is desired to produce an infant formula containing probiotic bacteria, it will be necessary to further dry the product to a final water content of around 1 %. This may be effected by passing the extruded product from the vacuum chamber to a fluidised bed dryer for example. Alternatively, or additionally, a source of heat such as a source of infra-red radiation may be provided in the vacuum chamber itself.

As noted above, the product of the extrusion process is typically in the form of porous pellets or aggregates of relatively low density. Unlike spray dried products, compositions produced according to the process of the present invention contain air trapped within the solid product. The incorporated air pockets have a non-circular shape as observed by fluorescence confocal microscopy. The structure can thus be compared to a frozen foam in which the air bubbles or pockets are non-spherical. If it is desired to produce a powder of higher density which takes up less room as well as looking more like the spray dried powders to which consumers are accustomed, the pellets/aggregates may be milled into a finely divided powder.

Nutritional compositions produced according to the process of the invention are found to have generally improved solubility/dispersibility compared to the same products produced by spray drying. At the same time, the nutritional quality of products made by the process of the invention (expressed for example in terms of lysine blockage) is found to be comparable to the same products produced by spray drying.

Further, implementing the process of the invention has a lower investment cost than the spray drying technology conventionally used to produce such products (no requirement for spray drying towers or air heaters means less requirement for space) and the process is simpler than spray drying making it overall more cost-efficient.

The invention will now be further illustrated by reference to the following examples.

### Description of drawings

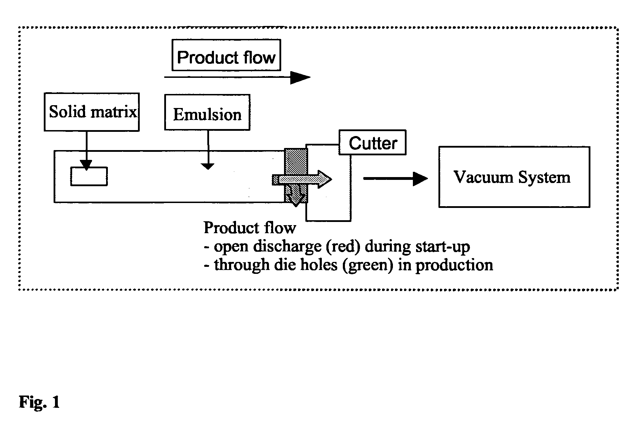

Figure 1 shows a schematic set-up of the process

The extruder used was a Clextral type BC45H co-rotating intermeshing twin-screw extruder with a processing length of 800 mm (L = 14.4 * D), 4 barrels and a die plate with 32 holes of 1.5 mm diameter. The screw configuration for Examples 1 and 2 was as shown in Table 1 below

**Table 1 Screw configuration:**

| | | | | | | | | |
|---|---|---|---|---|---|---|---|---|
| Length | mm | 100 | 100 | 150 | 100 | 50 | 100 | 200 |
| Pitch | mm | 66 | 50 | 33 | 66 | BLO+ | 66 | 50 |
| N° of flights | | 2 | 2 | 2 | 2 | 2 | 2 | 2 |

The screw configuration for Example 3 was as shown in Table 2 below

**Table 2 Screw configuration:**

| | | | | | | | | | | | | |
|---|---|---|---|---|---|---|---|---|---|---|---|---|
| Length | mm | 100 | 100 | 50 | 100 | 50 | 50 | 100 | 50 | 50 | 50 | 100 |
| Pitch | mm | 66 | 50 | BLO | 50 | 50 | BLO | 50 | 50 | BLO | 50 | 50 |
| N° of flights | | C2F | C2F | pos | C2F | C2F | neu | C2F | C2F | neu | C2F | C2F |

### Example 1 - Lactose-free infant formula

| Ingredients for Emulsion: | |
|---|---|
| Fat phase: | Water phase: |
| 420 g vegetable fat blend | 160 g Water |
| 3 g CITREM ® | 1.5g Sodium citrate |
| 30.8 g Potassium caseinate | |

Preparation of the fat phase: The vegetable fat blend is melted and mixed with the CITREM at 65°C. Then the potassium caseinate is sieved through a sieve of 1mm and added to the fat mixture with stirring. A yellow suspension is obtained.

Preparation of the water phase: The water is heated to 65°C, the sodium citrate is added and the solution is stirred for 10 min.

Preparation and homogenisation of the emulsion: The fat phase is added to the water phase with vigorous stirring until all the fat is incorporated. An increase in viscosity is noted. The pre-emulsion is stirred for another 5 min then the temperature is raised to 95°C and a multi-stage homogenisation is carried out at 85°C under a pressure of 300 bar. The resulting highly viscous emulsion is pumped directly into the extruder.

Extrusion of infant formula formulation: 37.5 kg/h of an emulsion prepared as described above together with 70 kg/h of a solid matrix comprising 78.87% Maltodextrin DE29, 0.8% K₂HPO₄, 12.22% Lacprodan DI-9224 whey protein isolate, 5.77% potassium caseinate and 2.34% calcium citrate, together with vitamin and trace element premixes are supplied to the extruder. Barrel 1 of the extruder is maintained at 21°C, barrel 2 at 60°C, barrel 3 at 106°C, barrel 4 at 109°C and the die plate is maintained at 110°C. The mixture is extruded at a pressure of 0.4 bar and a temperature of 103°C into a vacuum chamber at a pressure of 24 mbar yielding a solid product with a moisture content of 2.9%. The mean size of the fat particles D_{[0.5]} is 1.72 µm. The lysine blockage is 8%.

### Example 2 - Growing up milk

| Ingredients for Emulsion: | |
|---|---|
| Fat phase: | Water phase: |
| 420 g anhydrous milk fat | 160 g Water |
| 3 g CITREM ® | 1.5 g Sodium citrate |
| 40 g Milk protein concentrate | |

Preparation of the fat phase: The milk fat is melted and mixed with the CITREM and milk protein concentrate at 65 °C. A yellow suspension is obtained.

Preparation of the water phase: The water is heated to 65°C, the sodium citrate is added and the solution is stirred for 10 min.

Preparation and homogenisation of the emulsion: The fat phase is added to the water phase with vigorous stirring until all the fat is incorporated. An increase in viscosity is noted. The pre-emulsion is stirred for another 5 min then the temperature is raised to 95°C and a multi-stage homogenisation is carried out at 85°C under a pressure of 300 bar. The resulting highly viscous emulsion is pumped directly into the extruder.

Extrusion of growing up milk formulation: 37.5 kg/h of the emulsion together with 70 kg/h of a solid matrix with the composition 39.2% Maltodextrin DE 29, 0.8% K₂HPO₄, 15% milk protein concentrate 20%, 22.5% lactose and 2.5% calcium citrate together with vitamin and trace element premixes are supplied to the extruder. The extrusion conditions are the same as for Example 1 except that the die plate is heated to 105°C. The extruded product has a moisture content of 2.9%. D_{[0.5]} is 0.952 µm. Lysine blockage is 11.8%.

### Example 3 - Starter infant formula

| Ingredients for Emulsion: | |
|---|---|
| Fat phase: | Water phase: |
| 420 g vegetable fat blend | 160 g Water |
| 30.8 g Potassium caseinate | |

Preparation of the fat phase: The vegetable fat blend and potassium caseinate are stirred together. A yellow suspension is obtained.

Preparation of the water phase: The water is heated to 65°C.

Preparation and homogenisation of the emulsion: The fat phase is added to the water phase with vigorous stirring until all the fat is incorporated. An increase in viscosity is noted. The pre-emulsion is stirred for another 5 minutes then the temperature is raised to 95°C and a multi-stage homogenisation is carried out at 85°C under a pressure between 50-200 bar. The resulting highly viscous emulsion is pumped directly into the extruder.

Extrusion of infant formula formulation: 35 kg/h of an emulsion prepared as described above together with 72 kg/h of a solid matrix comprising 25.39% Maltodextrin DE29, 30.57% skim milk powder, 16.02% demineralised whey powder DWP28, 26.68% lactose, 2.34% salts and minerals, together with vitamin and trace element premixes are supplied to the extruder. Barrel 1 of the extruder is maintained at 30°C, barrel 2 at 60°C, barrel 3 at 110°C, barrel 4 at 110°C and the die plate is maintained at 110°C. The mixture is extruded at a pressure of 0.4 bar and a temperature of 105°C into a vacuum chamber at a pressure of 24 mbar yielding a solid product with a moisture content of about 8%. The mean size of the fat particles D_{[0.5]} is around 2 µm. The lysine blockage is less than 11%.

## Claims

1. A process for preparing a nutritional composition including protein, fat and carbohydrate which process comprises emulsifying the fat in water with an emulsifier to form an emulsion having a solids content of at least 70%, homogenising the emulsion and extruding the emulsion together with a solid matrix comprising the protein and the carbohydrate in a ratio between 1 part emulsion:0.5 parts matrix to 1 part emulsion:5 parts matrix into a vacuum chamber at a temperature at or above the melting point of the mixture of emulsion and matrix to obtain a solid product having a maximum water content of 10%.

2. A process as claimed in Claim 1, wherein the fat constitutes from 50 to 75% by weight of the emulsion.

3. A process as claimed in Claim 1 or 2, wherein the fat constitutes from 55 to 60% by weight of the emulsion.

4. A process as claimed in any preceding claim, wherein a mixture of fat and water soluble emulsifiers is used.

5. A process as claimed in Claim 4, wherein both the fat and water soluble emulsifiers are added to the fat prior to emulsification.

6. A process as claimed in any preceding claim wherein the mean particle size after homogenisation is in the range from 0.2 to 10µm.

7. A process as claimed in any preceding claim wherein the water content of the mixture of matrix and emulsion is 15% or less.

8. A process as claimed in any preceding claim wherein the nutritional composition is an infant formula.

9. A process as claimed in Claim 8, wherein the fat is selected from palm olein, coconut oil, canola oil, milk fat and mixtures thereof.

10. A process as claimed in any preceding claim, wherein the pressure in the vacuum chamber is between 1 and 50 mbar.

11. A process as claimed in any preceding claim, which further comprises a drying step after or at the same time as the extrusion.

12. A process as claimed in any preceding claim which further comprises the step of milling the extruded product.

## Patentansprüche

1. Verfahren zur Herstellung einer Ernährungszusammensetzung, die Protein, Fett und Kohlenhydrat beinhaltet, wobei das Verfahren das Emulgieren des Fetts in Wasser mit einem Emulgator unter Bildung einer Emulsion mit einem Feststoffgehalt von wenigstens 70%, das Homogenisieren der Emulsion und das Extrudieren der Emulsion gemeinsam mit einer festen Matrix, die das Protein und das Kohlenhydrat umfasst, in einem Verhältnis zwischen 1 Teil Emulsion : 0,5 Teile Matrix bis 1 Teil Emulsion : 5 Teile Matrix in eine Vakuumkammer bei einer Temperatur beim Schmelzpunkt der Mischung aus Emulsion und Matrix oder darüber umfasst, um ein festes Produkt mit einem maximalen Wassergehalt von 10% zu erhalten.

2. Verfahren nach Anspruch 1, wobei das Fett von 50 bis 75 Gew.-% der Emulsion bildet.

3. Verfahren nach Anspruch 1 oder 2, wobei das Fett von 55 bis 60 Gew.-% der Emulsion bildet.

4. Verfahren nach irgendeinem vorausgehenden Anspruch, wobei eine Mischung aus Fett und wasserlöslichen Emulgatoren verwendet wird.

5. Verfahren nach Anspruch 4, wobei sowohl das Fett als auch die wasserlöslichen Emulgatoren dem Fett vor der Emulgierung zugesetzt werden.

6. Verfahren nach irgendeinem vorausgehenden Anspruch, wobei die mittlere Teilchengröße nach der Homogenisierung im Bereich von 0,2 bis 10 µm liegt.

7. Verfahren nach irgendeinem vorausgehenden Anspruch, wobei der Wassergehalt in der Mischung aus Matrix und Emulsion 15% oder weniger beträgt.

8. Verfahren nach irgendeinem vorausgehenden Anspruch, wobei die Ernährungszusammensetzung eine Kleinkinder-Formulanahrung ist.

9. Verfahren nach Anspruch 8, wobei das Fett ausgewählt ist aus Palmolein, Kokosnussöl, Canolaöl, Milchfett und Mischungen davon.

10. Verfahren nach irgendeinem vorausgehenden Anspruch, wobei der Druck in der Vakuumkammer zwischen 1 und 50 mbar liegt.

11. Verfahren nach irgendeinem vorausgehenden Anspruch, das außerdem einen Trocknungsschritt nach oder gleichzeitig mit der Extrusion umfasst.

12. Verfahren nach irgendeinem vorausgehenden Anspruch, das außerdem die Stufe des Mahlens des extrudierten Produkts umfasst.

## Revendications

1. Procédé pour la préparation d'une composition nutritionnelle comprenant une protéine, une matière grasse et un glucide, procédé qui comprend l'émulsification de la matière grasse dans de l'eau avec un émulsionnant pour former une émulsion ayant une teneur en matières solides d'au moins 70 %, l'homogénéisation de l'émulsion et l'extrusion de l'émulsion conjointement avec une matrice solide comprenant la protéine et le glucide dans un rapport compris dans l'intervalle d'1 part d'émulsion : 0,5 part de matrice à 1 part d'émulsion : 5 parts de matrice dans une chambre à vide à une température égale ou supérieure au point de fusion du mélange d'émulsion et de matrice pour obtenir un produit solide ayant une teneur maximale en eau de 10 %.

2. Procédé suivant la revendication 1, dans lequel la matière grasse représente 50 à 75 % en poids de l'émulsion.

3. Procédé suivant la revendication 1 ou la revendication 2, dans lequel la matière grasse représente 55 à 60 % en poids de l'émulsion.

4. Procédé suivant l'une quelconque des revendications précédentes, dans lequel un mélange d'émulsionnants solubles dans les matières grasses et d'émulsionnants solubles dans l'eau est utilisé.

5. Procédé suivant la revendication 4, dans lequel les émulsionnants solubles dans les matières grasses et les émulsionnants solubles dans l'eau sont ajoutés à la matière grasse avant émulsification.

6. Procédé suivant l'une quelconque des revendications précédentes, dans lequel le diamètre moyen de particules après homogénéisation est compris dans l'intervalle de 0,2 à 10 µm.

7. Procédé suivant l'une quelconque des revendications précédentes, dans lequel la teneur en eau du mélange de matrice et d'émulsion est égale ou inférieure à 15 %.

8. Procédé suivant l'une quelconque des revendications précédentes, dans lequel la composition nutritionnelle est une formulation pour nourrissons.

9. Procédé suivant la revendication 8, dans lequel la matière grasse est choisie entre l'oléine de palme, l'huile de coprah, l'huile de canola, la matière grasse laitière et leurs mélanges.

10. Procédé suivant l'une quelconque des revendications précédentes, dans lequel la pression dans la chambre à vide est comprise dans l'intervalle de 1 à 50 mbar.

11. Procédé suivant l'une quelconque des revendications précédentes, qui comprend en outre une étape de déshydratation après ou en même temps que l'extrusion.

12. Procédé suivant l'une quelconque des revendications précédentes, qui comprend en outre l'étape de broyage du produit extrudé.
